# EUROPÄISCHE PATENTANMELDUNG

(11) **EP 3 940 559 A1**
(43) Veröffentlichungstag der Anmeldung: **19.01.2022**
(21) Anmeldenummer: 21195489.6
(22) Anmeldetag: 29.08.2017
(51) Int. Cl.: G06F 21/31, G06F 21/64

(54) **DATENBRILLE ZUM KRYPTOGRAPHISCHEN SIGNIEREN VON BILDDATEN**

(30) Priorität: 07.09.2016 DE 102016116770
(62) Teilanmeldung aus: 17758543.7
(71) Anmelder: Bundesdruckerei GmbH, 10969 Berlin (DE)
(72) Erfinder: DIETRICH, Frank, 12437 Berlin (DE); DRESSEL, Olaf, 14641 Wustermark (DE)
(74) Vertreter: Patentship Patentanwaltsgesellschaft mbH

(57) **Zusammenfassung**

Die Erfindung betrifft eine Datenbrille (100) zum kryptographischen Signieren von Bilddaten unter Verwendung einer Signaturerstellungseinheit, wobei die Datenbrille (100) durch einen Nutzer tragbar ist. Die Datenbrille (100) umfasst eine Bildkamera (101), welche ausgebildet ist, ein Bild zu erfassen, um die Bilddaten zu erhalten, wobei die Bilddaten das erfasste Bild repräsentieren. Die Datenbrille (100) umfasst ferner eine Authentifizierungseinrichtung (103), welche ausgebildet ist, den Nutzer zu authentifizieren. Die Datenbrille (100) umfasst zudem eine Kommunikationsschnittstelle (105), welche ausgebildet ist, ansprechend auf die Authentifizierung des Nutzers, die Bilddaten an die Signaturerstellungseinheit auszusenden, um die Bilddaten kryptographisch zu signieren.

## Beschreibung

Die vorliegende Erfindung betrifft das Gebiet der kryptographischen Signierung von Bilddaten, insbesondere zur Dokumentation von Produktionsschritten in Produktionsumgebungen.

In heutigen und zukünftigen Produktionsumgebungen besteht ein Bedarf, von Menschen durchgeführte Produktionsschritte revisionssicher zu dokumentieren und die Durchführung der Produktionsschritte nachweisen zu können. Die Dokumentation der Produktionsschritte kann beispielsweise schriftlich erfolgen, wobei mittels einer Unterschrift die Durchführung eines Produktionsschrittes dokumentiert und bestätigt wird. Dies ist typischerweise mit einem hohen Verwaltungsaufwand und einem hohen Zeitverlust bei der Dokumentation der Produktionsschritte verbunden. Ferner erfolgt eine Dokumentation der Produktionsschritte üblicherweise rein schriftlich.

Zur Dokumentation von Produktionsschritten in Produktionsumgebungen ist mithin eine Lösung wünschenswert, welche eine erhöhte Effizienz, insbesondere hinsichtlich des Verwaltungsaufwands und der erforderlichen Dokumentationszeit, aufweist. Ferner ist es wünschenswert, Bilder der Produktionsschritte oder der Produktionsergebnisse in die Dokumentation mit einzubeziehen.

Es ist daher eine Aufgabe der vorliegenden Erfindung, ein effizientes Konzept zur Dokumentation von Produktionsschritten in Produktionsumgebungen zu schaffen.

Diese Aufgabe wird durch die Merkmale der unabhängigen Ansprüche gelöst. Vorteilhafte Weiterbildungsformen sind Gegenstand der abhängigen Patentansprüche, der Beschreibung sowie der Zeichnungen.

Die Erfindung basiert auf der Erkenntnis, dass die obige Aufgabe durch eine Datenbrille gelöst werden kann, welche Bilddaten an eine Signaturerstellungseinheit aussenden kann, um die Bilddaten mit einer kryptographischen Signatur eines Nutzers zu versehen.

Zur Authentifizierung des Nutzers wird eine Authentifizierungseinrichtung verwendet, welche den Nutzer authentifizieren kann und bei erfolgreicher Authentifizierung die Signierung der Bilddaten durch die Signaturerstellungseinheit auslöst. Durch die enge Kopplung des Nutzers an die Datenbrille ist folglich eine hochwertige Authentifizierung des Nutzers möglich. Die Authentifizierung des Nutzers kann insbesondere gegenüber der Datenbrille erfolgen.

Dadurch wird der Vorteil erreicht, dass eine Dokumentation von Produktionsschritten in Produktionsumgebungen durch den Nutzer mit hoher Effizienz erreicht werden kann. Ferner können Bilder bzw. Bilddaten in die Dokumentation mit einbezogen werden.

Gemäß einem ersten Aspekt betrifft die Erfindung eine Datenbrille zum kryptographischen Signieren von Bilddaten unter Verwendung einer Signaturerstellungseinheit, wobei die Datenbrille durch einen Nutzer tragbar ist. Die Datenbrille umfasst eine Bildkamera, welche ausgebildet ist, ein Bild zu erfassen, um die Bilddaten zu erhalten, wobei die Bilddaten das erfasste Bild repräsentieren. Die Datenbrille umfasst ferner eine Authentifizierungseinrichtung, welche ausgebildet ist, den Nutzer zu authentifizieren. Die Datenbrille umfasst zudem eine Kommunikationsschnittstelle, welche ausgebildet ist, ansprechend auf die Authentifizierung des Nutzers, die Bilddaten an die Signaturerstellungseinheit auszusenden, um die Bilddaten kryptographisch zu signieren. Dadurch wird der Vorteil erreicht, dass eine effiziente Dokumentation von Produktionsschritten in Produktionsumgebungen unter Einbeziehung von Bilddaten realisiert werden kann.

Gemäß einer Ausführungsform umfasst die Datenbrille die Signaturerstellungseinheit. Dadurch wird der Vorteil erreicht, dass die Signierung der Bilddaten lokal durch die Datenbrille erfolgen kann.

Gemäß einer Ausführungsform ist die Kommunikationsschnittstelle ausgebildet, mit der Signaturerstellungseinheit über ein Kommunikationsnetzwerk zu kommunizieren, wobei die Kommunikationsschnittstelle ausgebildet ist, die Bilddaten über das Kommunikationsnetzwerk an die Signaturerstellungseinheit auszusenden. Dadurch wird der Vorteil erreicht, dass eine dedizierte Signaturerstellungseinheit verwendet werden kann, welche über das Kommunikationsnetzwerk erreichbar ist.

Gemäß einer Ausführungsform umfasst die Datenbrille einen Speicher, wobei die Kommunikationsschnittstelle ausgebildet ist, kryptographisch signierten Bilddaten von der Signaturerstellungseinheit zu empfangen, und wobei die Kommunikationsschnittstelle ausgebildet ist, die kryptographisch signierten Bilddaten in dem Speicher zu speichern. Dadurch wird der Vorteil erreicht, dass die kryptographisch signierten Bilddaten der Datenbrille oder dem Nutzer effizient zugeordnet werden können.

Gemäß einer Ausführungsform umfasst die Datenbrille einen Speicher, wobei die Kommunikationsschnittstelle ausgebildet ist, kryptographisch signierten Bilddaten von der Signaturerstellungseinheit über das Kommunikationsnetzwerk zu empfangen, und wobei die Kommunikationsschnittstelle ausgebildet ist, die kryptographisch signierten Bilddaten in dem Speicher zu speichern. Dadurch wird der Vorteil erreicht, dass die kryptographisch signierten Bilddaten der Datenbrille oder dem Nutzer effizient zugeordnet werden können.

Gemäß einer Ausführungsform umfasst die Authentifizierungseinrichtung ein Tastenfeld zum Erfassen eines Kennwortes des Nutzers, wobei die Authentifizierungseinrichtung ausgebildet ist, das erfasste Kennwort mit einem vorgespeicherten Kennwort zu vergleichen, und den Nutzer zu authentifizieren, falls das erfasste Kennwort dem vorgespeicherten Kennwort entspricht. Dadurch wird der Vorteil erreicht, dass eine Authentifizierung des Nutzers effizient realisiert werden kann. Das erfasste Kennwort und das vorgespeicherte Kennwort können persönliche Identifikationsnummern (PINs) sein.

Gemäß einer Ausführungsform umfasst die Datenbrille einen Brillenbügel, wobei das Tastenfeld an dem Brillenbügel angeordnet ist. Dadurch wird der Vorteil erreicht, dass das Tastenfeld für den Nutzer einfach erreichbar ist.

Gemäß einer Ausführungsform umfasst die Authentifizierungseinrichtung einen Beschleunigungssensor zum Erfassen eines Bewegungsmusters des Nutzers, wobei die Authentifizierungseinrichtung ausgebildet ist, das erfasste Bewegungsmuster mit einem vorgespeicherten Bewegungsmuster zu vergleichen, und den Nutzer zu authentifizieren, falls das erfasste Bewegungsmuster dem vorgespeicherten Bewegungsmuster entspricht. Dadurch wird der Vorteil erreicht, dass charakteristische Bewegungen des Nutzers zur Authentifizierung des Nutzers verwendet werden können.

Gemäß einer Ausführungsform ist der Beschleunigungssensor ausgebildet, ein Kopfbewegungsmuster des Nutzers als Bewegungsmuster des Nutzers zu erfassen. Dadurch wird der Vorteil erreicht, dass eine Authentifizierung des Nutzers durch eine Bewegung des Kopfes des Nutzers realisiert werden kann. Das erfasste Bewegungsmuster des Nutzers und das vorgespeicherte Bewegungsmuster des Nutzers können beispielsweise ein Nicken oder ein Schütteln des Kopfes repräsentieren. Gemäß einer Ausführungsform umfasst die Datenbrille eine Anzeigeeinrichtung, wobei die Anzeigeeinrichtung ausgebildet ist, das erfasste Bild dem Nutzer anzuzeigen. Dadurch wird der Vorteil erreicht, dass der Nutzer das erfasste Bild vor der Signierung der Bilddaten verifizieren kann.

Gemäß einer Ausführungsform umfasst die Datenbrille eine Anzeigeeinrichtung, wobei die Anzeigeeinrichtung ausgebildet ist, das erfasste Bild in ein Sichtfeld des Nutzers einzublenden. Dadurch wird der Vorteil erreicht, dass der Nutzer das erfasste Bild vor der Signierung der Bilddaten verifizieren kann.

Gemäß einer Ausführungsform umfasst die Datenbrille eine Anzeigeeinrichtung, wobei die Anzeigeeinrichtung ausgebildet ist, eine Mehrzahl von Hilfslinien in ein Sichtfeld des Nutzers einzublenden, wobei die Mehrzahl von Hilfslinien einen Erfassungsbereich der Bildkamera zum Erfassen des Bildes repräsentieren. Dadurch wird der Vorteil erreicht, dass ein zu erfassendes Bild effizient durch den Nutzer bestimmt werden kann.

Gemäß einem zweiten Aspekt betrifft die Erfindung eine Signaturerstellungseinheit zum Kommunizieren mit einer Datenbrille. Die Datenbrille ist ausgebildet, ein Bild zu erfassen, um Bilddaten zu erhalten, wobei die Bilddaten das erfasste Bild repräsentieren. Die Datenbrille ist ferner ausgebildet, einen Nutzer zu authentifizieren. Die Datenbrille ist zudem ausgebildet, ansprechend auf die Authentifizierung des Nutzers, die Bilddaten an die Signaturerstellungseinheit auszusenden. Die Signaturerstellungseinheit umfasst eine Kommunikationsschnittstelle, welche ausgebildet ist, die Bilddaten von der Datenbrille zu empfangen. Die Signaturerstellungseinheit umfasst ferner einen Prozessor, welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist. Dadurch wird der Vorteil erreicht, dass eine effiziente Dokumentation von Produktionsschritten in Produktionsumgebungen unter Einbeziehung von Bilddaten realisiert werden kann. Die kryptographische Signierung kann auf der Basis einer Public-Key-Infrastruktur erfolgen. Dem privaten Signaturschlüssel kann ein öffentlicher Signaturprüfschlüssel zugeordnet sein, wobei der private Signaturschlüssel und der öffentliche Signaturprüfschlüssel ein kryptographisches Schlüsselpaar bilden.

Gemäß einer Ausführungsform umfasst die Datenbrille die Signaturerstellungseinheit. Dadurch wird der Vorteil erreicht, dass die Signierung der Bilddaten lokal durch die Datenbrille erfolgen kann.

Gemäß einer Ausführungsform ist die Kommunikationsschnittstelle ausgebildet, mit der Datenbrille über ein Kommunikationsnetzwerk zu kommunizieren, wobei die Kommunikationsschnittstelle ausgebildet ist, die Bilddaten über das Kommunikationsnetzwerk von der Datenbrille zu empfangen. Dadurch wird der Vorteil erreicht, dass eine dedizierte Signaturerstellungseinheit verwendet werden kann, welche über das Kommunikationsnetzwerk erreichbar ist.

Gemäß einer Ausführungsform ist die Kommunikationsschnittstelle ausgebildet, die kryptographisch signierten Bilddaten an die Datenbrille auszusenden. Dadurch wird der Vorteil erreicht, dass die kryptographisch signierten Bilddaten der Datenbrille oder dem Nutzer effizient zugeordnet werden können.

Gemäß einer Ausführungsform umfasst die Signaturerstellungseinheit eine Datenbank, wobei der Prozessor ausgebildet ist, die kryptographisch signierten Bilddaten in der Datenbank zu speichern. Dadurch wird der Vorteil erreicht, dass die kryptographisch signierten Bilddaten effizient verwaltet und archiviert werden können.

Gemäß einem dritten Aspekt betrifft die Erfindung ein System zum kryptographischen Signieren von Bilddaten. Das System umfasst eine Datenbrille gemäß dem ersten Aspekt der Erfindung, und eine Signaturerstellungseinheit gemäß dem zweiten Aspekt der Erfindung. Dadurch wird der Vorteil erreicht, dass eine effiziente Dokumentation von Produktionsschritten in Produktionsumgebungen unter Einbeziehung von Bilddaten realisiert werden kann.

Gemäß einem vierten Aspekt betrifft die Erfindung ein Verfahren zum kryptographischen Signieren von Bilddaten unter Verwendung einer Datenbrille und einer Signaturerstellungseinheit. Die Datenbrille umfasst eine Bildkamera, eine Authentifizierungseinrichtung und eine Kommunikationsschnittstelle. Die Datenbrille ist durch einen Nutzer tragbar. Das Verfahren umfasst ein Erfassen eines Bildes durch die Bildkamera, um die Bilddaten zu erhalten, wobei die Bilddaten das erfasste Bild repräsentieren, ein Authentifizieren des Nutzers durch die Authentifizierungseinrichtung, und, ansprechend auf die Authentifizierung des Nutzers, ein Aussenden der Bilddaten an die Signaturerstellungseinheit durch die Kommunikationsschnittstelle, um die Bilddaten kryptographisch zu signieren. Dadurch wird der Vorteil erreicht, dass eine effiziente Dokumentation von Produktionsschritten in Produktionsumgebungen unter Einbeziehung von Bilddaten realisiert werden kann.

Das Verfahren kann durch die Datenbrille ausgeführt werden. Weitere Merkmale des Verfahrens ergeben sich unmittelbar aus den Merkmalen und/oder der Funktionalität der Datenbrille.

Gemäß einem fünften Aspekt betrifft die Erfindung ein Verfahren zum Kommunizieren mit einer Datenbrille unter Verwendung einer Signaturerstellungseinheit. Die Signaturerstellungseinheit umfasst eine Kommunikationsschnittstelle und einen Prozessor. Die Datenbrille ist ausgebildet, ein Bild zu erfassen, um Bilddaten zu erhalten, wobei die Bilddaten das erfasste Bild repräsentieren. Die Datenbrille ist ferner ausgebildet, einen Nutzer zu authentifizieren. Die Datenbrille ist zudem ausgebildet, ansprechend auf die Authentifizierung des Nutzers, die Bilddaten an die Signaturerstellungseinheit auszusenden. Das Verfahren umfasst ein Empfangen der Bilddaten von der Datenbrille durch die Kommunikationsschnittstelle, und ein Verknüpfen der empfangenen Bilddaten mit einem privaten Signaturschlüssel durch den Prozessor, um kryptographisch signierte Bilddaten zu erhalten, wobei der private Signaturschlüssel dem Nutzer zugeordnet ist. Dadurch wird der Vorteil erreicht, dass eine effiziente Dokumentation von Produktionsschritten in Produktionsumgebungen unter Einbeziehung von Bilddaten realisiert werden kann.

Das Verfahren kann durch die Signaturerstellungseinheit ausgeführt werden. Weitere Merkmale des Verfahrens ergeben sich unmittelbar aus den Merkmalen und/oder der Funktionalität der Signaturerstellungseinheit.

Gemäß einem sechsten Aspekt betrifft die Erfindung ein Computerprogramm mit einem Programmcode zum Ausführen des Verfahrens gemäß dem vierten Aspekt der Erfindung oder des Verfahrens gemäß dem fünften Aspekt der Erfindung. Dadurch wird der Vorteil erreicht, dass die Verfahren automatisiert ausgeführt werden können. Die Datenbrille und/oder die Signaturerstellungseinheit können programmtechnisch eingerichtet sein, um den Programmcode oder Teile des Programmcodes auszuführen. Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm einer Datenbrille zum kryptographischen Signieren von Bilddaten;
- Fig. 2: ein schematisches Diagramm einer Signaturerstellungseinheit zum Kommunizieren mit einer Datenbrille;
- Fig. 3: ein schematisches Diagramm eines Systems zum kryptographischen Signieren von Bilddaten;
- Fig. 4: ein schematisches Diagramm eines Verfahrens zum kryptographischen Signieren von Bilddaten; und
- Fig. 5: ein schematisches Diagramm eines Verfahrens zum Kommunizieren mit einer Datenbrille.

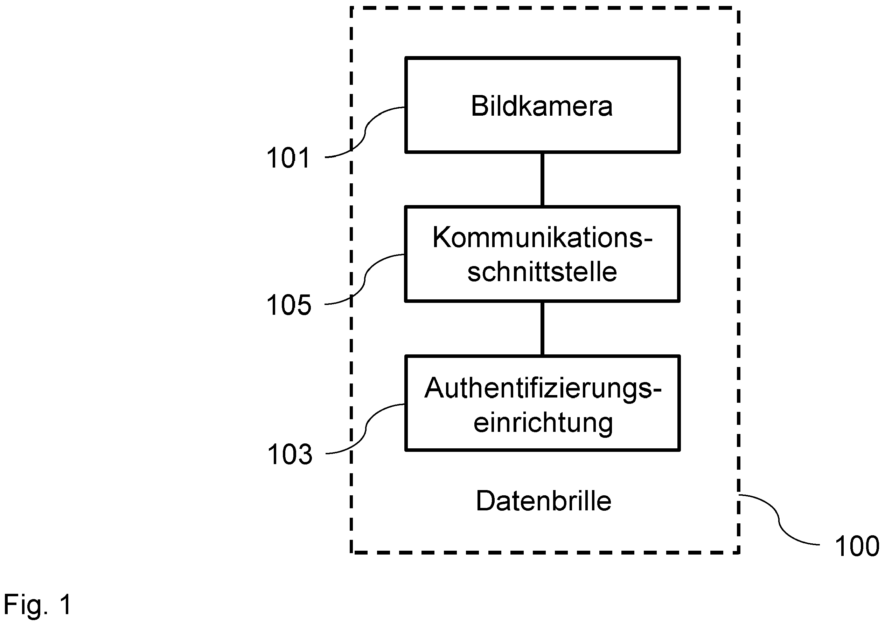

Fig. 1 zeigt ein schematisches Diagramm einer Datenbrille 100 zum kryptographischen Signieren von Bilddaten unter Verwendung einer Signaturerstellungseinheit, wobei die Datenbrille 100 durch einen Nutzer tragbar ist.

Die Datenbrille 100 umfasst eine Bildkamera 101, welche ausgebildet ist, ein Bild zu erfassen, um die Bilddaten zu erhalten, wobei die Bilddaten das erfasste Bild repräsentieren. Die Datenbrille 100 umfasst ferner eine Authentifizierungseinrichtung 103, welche ausgebildet ist, den Nutzer zu authentifizieren. Die Datenbrille 100 umfasst zudem eine Kommunikationsschnittstelle 105, welche ausgebildet ist, ansprechend auf die Authentifizierung des Nutzers, die Bilddaten an die Signaturerstellungseinheit auszusenden, um die Bilddaten kryptographisch zu signieren.

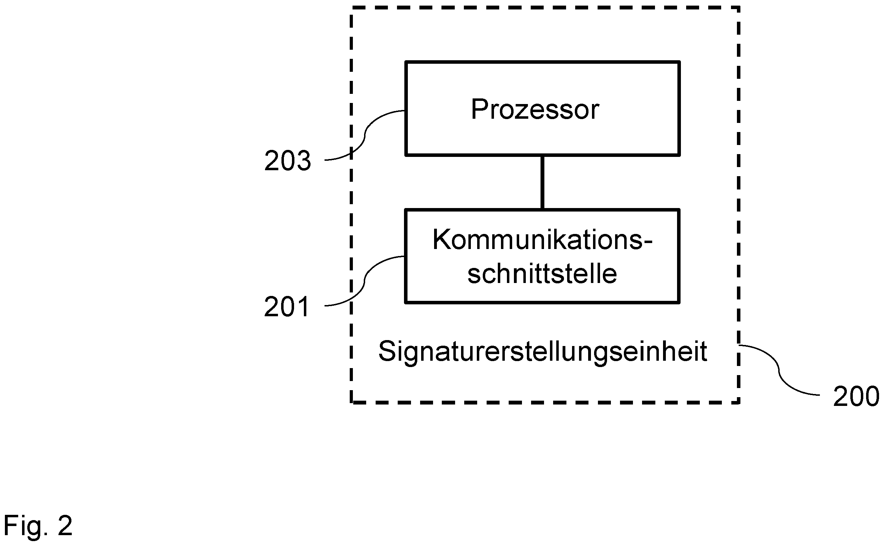

Fig. 2 zeigt eine Signaturerstellungseinheit 200 zum Kommunizieren mit einer Datenbrille. Die Datenbrille ist ausgebildet, ein Bild zu erfassen, um Bilddaten zu erhalten, wobei die Bilddaten das erfasste Bild repräsentieren. Die Datenbrille ist ferner ausgebildet, einen Nutzer zu authentifizieren. Die Datenbrille ist zudem ausgebildet, ansprechend auf die Authentifizierung des Nutzers, die Bilddaten an die Signaturerstellungseinheit 200 auszusenden.

Die Signaturerstellungseinheit 200 umfasst eine Kommunikationsschnittstelle 201, welche ausgebildet ist, die Bilddaten von der Datenbrille zu empfangen. Die Signaturerstellungseinheit 200 umfasst ferner einen Prozessor 203, welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist.

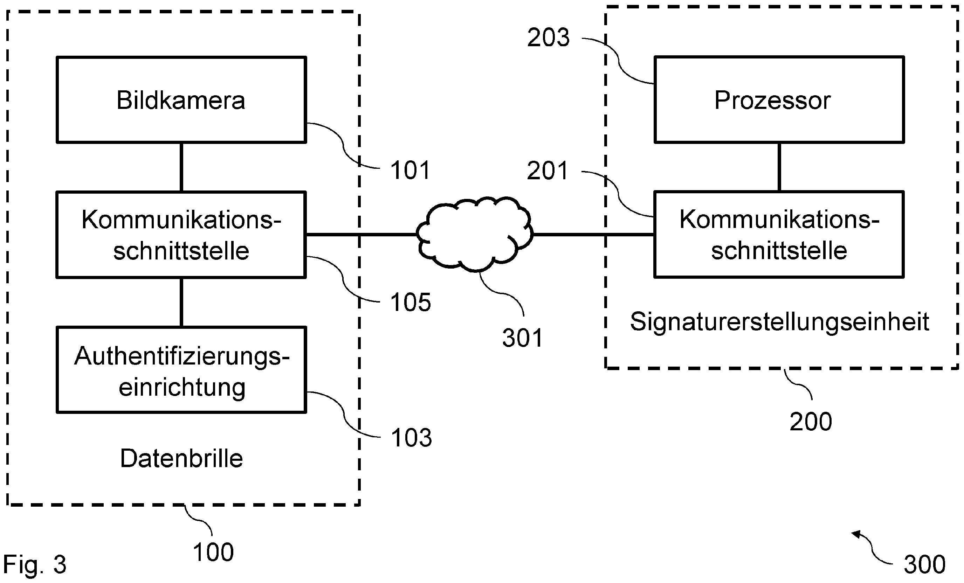

Fig. 3 zeigt ein schematisches Diagramm eines Systems 300 zum kryptographischen Signieren von Bilddaten. Das System 300 umfasst eine Datenbrille 100 und eine Signaturerstellungseinheit 200. Die Datenbrille 100 und die Signaturerstellungseinheit 200 kommunizieren über ein Kommunikationsnetzwerk 301. Die Datenbrille 100 ist durch einen Nutzer tragbar.

Die Datenbrille 100 umfasst eine Bildkamera 101, welche ausgebildet ist, ein Bild zu erfassen, um die Bilddaten zu erhalten, wobei die Bilddaten das erfasste Bild repräsentieren. Die Datenbrille 100 umfasst ferner eine Authentifizierungseinrichtung 103, welche ausgebildet ist, den Nutzer zu authentifizieren. Die Datenbrille 100 umfasst zudem eine Kommunikationsschnittstelle 105, welche ausgebildet ist, ansprechend auf die Authentifizierung des Nutzers, die Bilddaten, beispielsweise über das Kommunikationsnetzwerk 301, an die Signaturerstellungseinheit 200 auszusenden.

Die Signaturerstellungseinheit 200 umfasst eine Kommunikationsschnittstelle 201, welche ausgebildet ist, die Bilddaten von der Datenbrille, beispielsweise über das Kommunikationsnetzwerk 301, zu empfangen. Die Signaturerstellungseinheit 200 umfasst ferner einen Prozessor 203, welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist.

Gemäß einer Ausführungsform umfasst die Datenbrille 100 die Signaturerstellungseinheit 200. Mithin kann auf das Kommunikationsnetzwerk 301 verzichtet werden.

Durch ein Wearable, beispielsweise die Datenbrille 100, besteht die Möglichkeit, eine enge Kopplung zwischen dem Wearable und dem Nutzer, welcher das Wearable trägt, zu realisieren. Folglich kann ein Auslösen einer Signierung durch das Wearable, beispielsweise die Datenbrille 100, erfolgen.

Eine Dokumentation einer Durchführung eines Prozessschrittes kann auf elektronischem Weg durch eine kryptographische Signatur erfolgen. Der Vorgang des kryptographischen Signierens kann beispielsweise die folgenden Merkmale umfassen:
- Auswahl und Überprüfung der zu signierenden Bilddaten;
- Aussenden der Bilddaten an die Signaturerstellungseinheit 200; und
- Auslösen der Signierung durch eine geeignete Art der Willensbekundung.

Durch die Datenbrille 100 ist es möglich, die zu signierenden Bilddaten und/oder weitere Informationen während eines Arbeitsprozesses anzuzeigen bzw. durch die eingebaute Bildkamera 101 aufzunehmen und an die Signaturerstellungseinheit 200 zu senden, welche vertrauenswürdig sein kann. Beispielsweise auf Grundlage der elDAS-Verordnung der Europäischen Union ist es möglich, eine serverbasierte Signaturerstellungseinheit 200 zu verwenden, welche den Anforderungen einer qualifizierten elektronischen Signatur (QES) genügen kann. Um die entsprechenden Anforderungen zu erfüllen, ist eine hochwertige Authentifizierung für das Auslösen der kryptographischen Signierung über eine Willensbekundung wünschenswert.

Die enge Kopplung zwischen der Datenbrille 100 und dem Nutzer, beispielsweise durch ein individuelles, mehrstelliges Kennwort und/oder eine Interaktion des Nutzers mit der Datenbrille 100 ermöglicht eine starke Authentifizierung des Nutzers für die Signaturerstellungseinheit 200 und somit ein Auslösen der kryptographischen Signierung. Gemäß einer Ausführungsform ist die Signaturerstellungseinheit 200 in Produktions-Lokale-Geräte der Produktionsumgebung integriert.

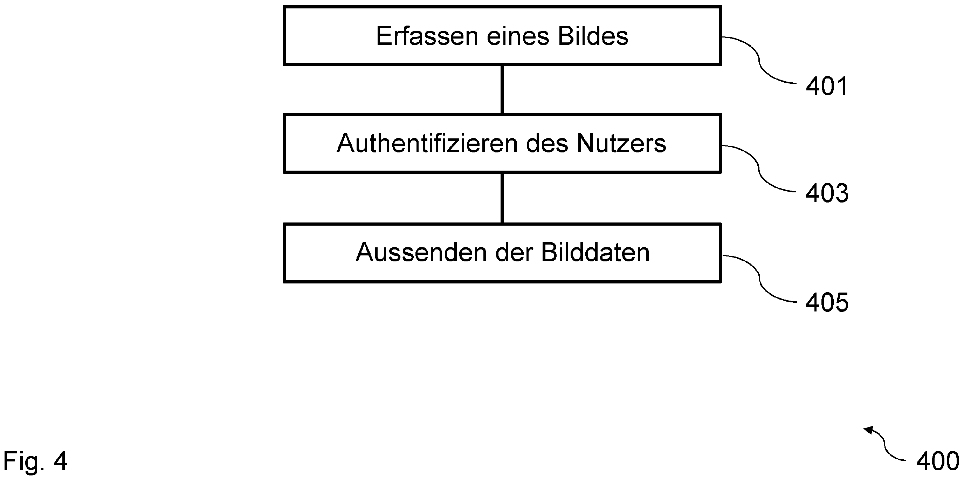

Fig. 4 zeigt ein schematisches Diagramm eines Verfahrens 400 zum kryptographischen Signieren von Bilddaten unter Verwendung einer Datenbrille und einer Signaturerstellungseinheit. Die Datenbrille umfasst eine Bildkamera, eine Authentifizierungseinrichtung und eine Kommunikationsschnittstelle. Die Datenbrille ist durch einen Nutzer tragbar.

Das Verfahren 400 umfasst ein Erfassen 401 eines Bildes durch die Bildkamera, um die Bilddaten zu erhalten, wobei die Bilddaten das erfasste Bild repräsentieren, ein Authentifizieren 403 des Nutzers durch die Authentifizierungseinrichtung, und, ansprechend auf die Authentifizierung des Nutzers, ein Aussenden 405 der Bilddaten an die Signaturerstellungseinheit durch die Kommunikationsschnittstelle, um die Bilddaten kryptographisch zu signieren.

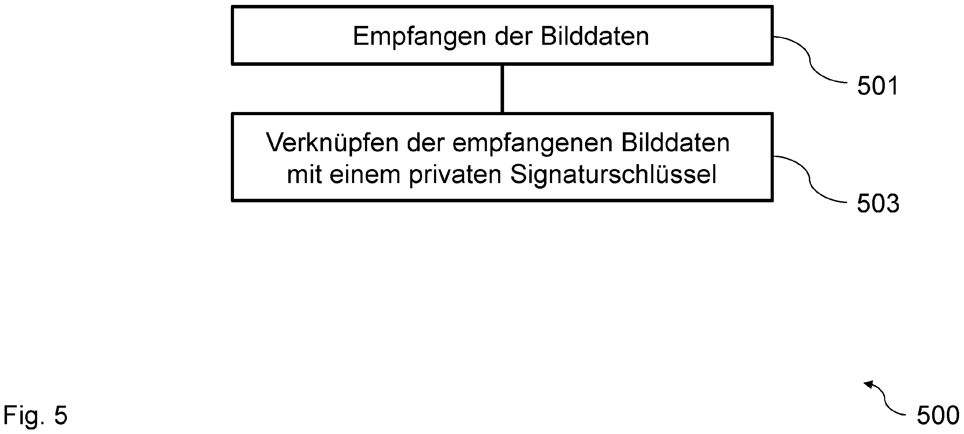

Fig. 5 zeigt ein schematisches Diagramm eines Verfahrens 500 zum Kommunizieren mit einer Datenbrille unter Verwendung einer Signaturerstellungseinheit. Die Signaturerstellungseinheit umfasst eine Kommunikationsschnittstelle und einen Prozessor. Die Datenbrille ist ausgebildet, ein Bild zu erfassen, um Bilddaten zu erhalten, wobei die Bilddaten das erfasste Bild repräsentieren. Die Datenbrille ist ferner ausgebildet, einen Nutzer zu authentifizieren. Die Datenbrille ist zudem ausgebildet, ansprechend auf die Authentifizierung des Nutzers, die Bilddaten an die Signaturerstellungseinheit auszusenden.

Das Verfahren 500 umfasst ein Empfangen 501 der Bilddaten von der Datenbrille durch die Kommunikationsschnittstelle, und ein Verknüpfen 503 der empfangenen Bilddaten mit einem privaten Signaturschlüssel durch den Prozessor, um kryptographisch signierte Bilddaten zu erhalten, wobei der private Signaturschlüssel dem Nutzer zugeordnet ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

### BEZUGSZEICHENLISTE

- 100: Datenbrille
- 101: Bildkamera
- 103: Authentifizierungseinrichtung
- 105: Kommunikationsschnittstelle

- 200: Signaturerstellungseinheit
- 201: Kommunikationsschnittstelle
- 203: Prozessor

- 300: System
- 301: Kommunikationsnetzwerk

- 400: Verfahren zum kryptographischen Signieren von Bilddaten
- 401: Erfassen eines Bildes
- 403: Authentifizieren des Nutzers
- 405: Aussenden der Bilddaten

- 500: Verfahren zum Kommunizieren mit einer Datenbrille
- 501: Empfangen der Bilddaten
- 503: Verknüpfen der empfangenen Bilddaten mit einem privaten Signaturschlüssel

## Patentansprüche

1. Datenbrille (100) zum kryptographischen Signieren von Bilddaten unter Verwendung einer Signaturerstellungseinheit (200), wobei die Datenbrille (100) durch einen Nutzer tragbar ist, mit:
einer Bildkamera (101), welche ausgebildet ist, ein Bild zu erfassen, um die Bilddaten zu erhalten, wobei die Bilddaten das erfasste Bild repräsentieren;
einer Authentifizierungseinrichtung (103), welche ausgebildet ist, den Nutzer zu authentifizieren; und
einer Kommunikationsschnittstelle (105), welche ausgebildet ist, ansprechend auf die Authentifizierung des Nutzers, die Bilddaten an die Signaturerstellungseinheit (200) auszusenden, um die Bilddaten kryptographisch zu signieren,
wobei die Datenbrille (100) einen Speicher umfasst, wobei die Kommunikationsschnittstelle (105) ausgebildet ist, kryptographisch signierte Bilddaten von der Signaturerstellungseinheit (200) zu empfangen, und wobei die Kommunikationsschnittstelle (105) ausgebildet ist, die kryptographisch signierten Bilddaten in dem Speicher zu speichern.

2. Datenbrille (100) nach Anspruch 1, wobei die Kommunikationsschnittstelle (105) ausgebildet ist, mit der Signaturerstellungseinheit (200) über ein Kommunikationsnetzwerk (301) zu kommunizieren, und wobei die Kommunikationsschnittstelle (105) ausgebildet ist, die Bilddaten über das Kommunikationsnetzwerk (301) an die Signaturerstellungseinheit (200) auszusenden.

3. Datenbrille (100) nach einem der vorstehenden Ansprüche, wobei die Authentifizierungseinrichtung (103) ein Tastenfeld zum Erfassen eines Kennwortes des Nutzers umfasst, und wobei die Authentifizierungseinrichtung (103) ausgebildet ist, das erfasste Kennwort mit einem vorgespeicherten Kennwort zu vergleichen, und den Nutzer zu authentifizieren, falls das erfasste Kennwort dem vorgespeicherten Kennwort entspricht.

4. Datenbrille (100) nach einem der vorstehenden Ansprüche, wobei die Authentifizierungseinrichtung (103) einen Beschleunigungssensor zum Erfassen eines Bewegungsmusters des Nutzers umfasst, und wobei die Authentifizierungseinrichtung (103) ausgebildet ist, das erfasste Bewegungsmuster mit einem vorgespeicherten Bewegungsmuster zu vergleichen, und den Nutzer zu authentifizieren, falls das erfasste Bewegungsmuster dem vorgespeicherten Bewegungsmuster entspricht.

5. Datenbrille (100) nach Anspruch 4, wobei der Beschleunigungssensor ausgebildet ist, ein Kopfbewegungsmuster des Nutzers als Bewegungsmuster des Nutzers zu erfassen.

6. Datenbrille (100) nach einem der vorstehenden Ansprüche, wobei die Datenbrille (100) eine Anzeigeeinrichtung umfasst, und wobei die Anzeigeeinrichtung ausgebildet ist, das erfasste Bild dem Nutzer anzuzeigen.

7. Signaturerstellungseinheit (200) zum Kommunizieren mit einer Datenbrille (100), wobei die Datenbrille (100) ausgebildet ist, ein Bild zu erfassen, um Bilddaten zu erhalten, wobei die Bilddaten das erfasste Bild repräsentieren, wobei die Datenbrille (100) ausgebildet ist, einen Nutzer zu authentifizieren, wobei die Datenbrille (100) ausgebildet ist, ansprechend auf die Authentifizierung des Nutzers, die Bilddaten an die Signaturerstellungseinheit (200) auszusenden, mit:
einer Kommunikationsschnittstelle (201), welche ausgebildet ist, die Bilddaten von der Datenbrille (100) zu empfangen; und
einem Prozessor (203), welcher ausgebildet ist, die empfangenen Bilddaten mit einem privaten Signaturschlüssel zu verknüpfen, um kryptographisch signierte Bilddaten zu erhalten, wobei der private Signaturschlüssel dem Nutzer zugeordnet ist,
wobei die Kommunikationsschnittstelle (201) ausgebildet ist, die kryptographisch signierten Bilddaten an die Datenbrille (100) auszusenden.

8. Signaturerstellungseinheit (200) nach Anspruch 7, wobei die Kommunikationsschnittstelle (201) ausgebildet ist, mit der Datenbrille (100) über ein Kommunikationsnetzwerk (301) zu kommunizieren, und wobei die Kommunikationsschnittstelle (201) ausgebildet ist, die Bilddaten über das Kommunikationsnetzwerk (301) von der Datenbrille (100) zu empfangen.

9. Signaturerstellungseinheit (200) nach Anspruch 7 oder 8, wobei die Signaturerstellungseinheit (200) eine Datenbank umfasst, und wobei der Prozessor (203) ausgebildet ist, die kryptographisch signierten Bilddaten in der Datenbank zu speichern.
